# EUROPÄISCHE PATENTANMELDUNG

(11) **EP 3 081 415 A1**
(43) Veröffentlichungstag der Anmeldung: **19.10.2016**
(21) Anmeldenummer: 16159125.0
(22) Anmeldetag: 08.03.2016
(51) Int. Cl.: B60J 1/20

(54) **SCHUTZVORRICHTUNG FÜR EIN KRAFTFAHRZEUG**

(30) Priorität: 14.04.2015 DE 102015206661
(71) Anmelder: BOS GmbH & Co. KG, 73760 Ostfildern (DE)
(72) Erfinder: Lekar, Jan, 73760 Ostfildern (DE)
(74) Vertreter: Patentanwälte Ruff, Wilhelm, Beier, Dauster & Partner mbB

(57) **Zusammenfassung**

Eine derartige Schutzvorrichtung mit einem flexiblen Flächengebilde, das auf einer Wickelwelle gehalten und zwischen einer ausgezogenen Schutzposition und einer auf die Wickelwelle aufgewickelten Ruheposition verlagerbar ist, wobei die Wickelwelle motorisch in beiden Drehrichtungen angetrieben ist, wobei das Flächengebilde an seinem in Auszugrichtung vorderen Stirnendbereich mit einem formstabilen Auszugprofil versehen ist, und wobei Antriebsübertragungsmittel vorgesehen sind, die am Auszugprofil angreifen und mit der Wickelwelle in Wirkverbindung sind, ist bekannt.

Erfindungsgemäß ist der Wickelwelle eine Blockiereinrichtung zugeordnet, die mittels einer Steuereinrichtung zwischen einer die Wickelwelle für eine Drehbewegung freigebenden Freigabestellung und einer die Wickelwelle gegen eine Drehbewegung blockierenden Sicherungsstellung verlagerbar ist abhängig von einer Verlagerungsstellung des Auszugprofils.

## Beschreibung

Die Erfindung betrifft eine Schutzvorrichtung für ein Kraftfahrzeug, insbesondere für einen Fahrzeuginnenraum, mit einem flexiblen Flächengebilde, das auf einer Wickelwelle gehalten und zwischen einer ausgezogenen Schutzposition und einer auf die Wickelwelle aufgewickelten Ruheposition verlagerbar ist, wobei die Wickelwelle mittels eines Antriebsmotors in beiden Drehrichtungen angetrieben ist, wobei das Flächengebilde an seinem in Auszugrichtung vorderen Stirnendbereich mit einem formstabilen Auszugprofil versehen ist, und wobei Antriebsübertragungsmittel vorgesehen sind, die am Auszugprofil angreifen und mit der Wickelwelle in Wirkverbindung sind.

Eine bekannte Schutzvorrichtung in Form einer Beschattungsvorrichtung für eine Heckscheibe eines Personenkraftwagens weist ein flexibles Flächengebilde in Form eines Beschattungsgebildes auf, das mit einem Stirnendbereich auf einer Wickelwelle gehalten ist. Ein gegenüberliegender Stirnendbereich des Beschattungsgebildes ist mit einem formstabilen Auszugprofil versehen. Die Wickelwelle ist in einem Kassettengehäuse drehbar gelagert. Durch einen entsprechenden Drehvorgang der Wickelwelle wird je nach Drehrichtung ein Auf- oder Abwickelvorgang des Beschattungsgebildes erzielt. Das formstabile Auszugprofil ist im betriebsfertig montierten Zustand in fahrzeugfesten Führungsschienenanordnungen verschiebbar gelagert. Das Auszugprofil wird in den Führungsschienenanordnungen längsverlagert durch Antriebsübertragungsmittel, die mit einem Antriebsmotor in Wirkverbindung stehen. Der Antriebsmotor ist zudem mit der Wickelwelle gekoppelt, um eine Drehbewegung der Wickelwelle für einen entsprechenden Auf- oder Abwickelvorgang des Beschattungsgebildes zu erreichen. In einer ausgezogenen Schutzposition ist das Beschattungsgebilde aufgespannt, um die Heckscheibe abzudunkeln. In der aufgewickelten Ruheposition ist das Beschattungsgebilde auf die Wickelwelle aufgewickelt und in dem Kassettengehäuse untergebracht.

Aufgabe der Erfindung ist es, eine Schutzvorrichtung der eingangs genannten Art zu schaffen, die ein Straffhalten des flexiblen Flächengebildes in der ausgezogenen Schutzposition ermöglicht.

Diese Aufgabe wird dadurch gelöst, dass der Wickelwelle eine Blockiereinrichtung zugeordnet ist, die mittels einer Steuereinrichtung zwischen einer die Wickelwelle für eine Drehbewegung freigebenden Freigabestellung und einer die Wickelwelle gegen eine Drehbewegung blockierenden Sicherungsstellung verlagerbar ist abhängig von einer Verlagerungsstellung des Auszugprofils. Erfindungsgemäß kann die Wickelwelle - je nachdem, wo sich das Auszugprofil befindet - blockiert oder für eine Drehbewegung freigegeben werden. Eine Blockierung der Wickelwelle erfolgt in Ausziehrichtung des Flächengebildes, wenn das Auszugprofil sich kurz vor Erreichen der ausgezogenen Schutzposition des Flächengebildes befindet. Das Auszugprofil kann noch in seine Endstellung überführt werden, um die ausgezogene Schutzposition des flexiblen Flächengebildes zu erreichen, wohingegen die Wickelwelle bereits blockiert ist, so dass die weitere Ausziehbewegung des Auszugprofils zu der gewünschten Straffung des flexiblen Flächengebildes führt. In umgekehrter Richtung wird die Wickelwelle durch die Blockiereinrichtung wieder freigegeben, um durch eine entsprechende Drehbewegung einen Aufwickelvorgang des Flächengebildes einzuleiten. Die Blockiereinrichtung und die Steuereinrichtung können mechanisch ausgeführt sein. Es ist auch möglich, die Blockiereinrichtung und/oder die Steuereinrichtung elektrisch oder elektronisch auszuführen, wobei insbesondere der Antriebsmotor für die Wickelwelle durch entsprechende Bestromung ein Blockiermoment erzeugen kann. Die Steuereinrichtung kann mittels einer entsprechenden Sensorik den Antriebsmotor in geeigneter Weise elektrisch oder elektronisch ansteuern, um die Blockierung oder Freigabe des Antriebsmotors zu erzielen.

Die erfindungsgemäße Schutzvorrichtung ist zur Beschattung von Glasflächenbereichen des Fahrzeuginnenraums, insbesondere zur Beschattung von Fahrzeugheck- oder Fahrzeugseitenscheiben oder zur Beschattung von Glasdachbereichen vorgesehen. Alternativ ist die erfindungsgemäße Schutzvorrichtung zum Abdecken und/oder Abtrennen eines Laderaums innerhalb des Fahrzeuginnenraums vorgesehen. Eine weitere Ausführungsform der Erfindung ist zur Abdeckung einer Ladefläche eines Pickup-Fahrzeugs vorgesehen.

In Ausgestaltung der Erfindung umfasst die Blockiereinrichtung ein mit der Wickelwelle in Wirkverbindung bringbares mechanisches Sperrelement. Das Sperrelement wirkt auf die Wickelwelle oder ein drehfest mit der Wickelwelle verbundenes Stützelement.

In weiterer Ausgestaltung der Erfindung ist das Sperrelement mittels einer Federeinheit derart federkraftbeaufschlagt, dass das Sperrelement in einer Ruhestellung außer Eingriff mit der Wickelwelle ist. Das Sperrelement wirkt in seiner unbelasteten Ruhestellung daher nicht auf die Wickelwelle ein.

In weiterer Ausgestaltung der Erfindung greift die Steuereinrichtung an dem Sperrelement an, um das Sperrelement aus der Ruhestellung gegen die Federkraft der Federeinheit in eine Sperrstellung relativ zur Wickelwelle zu überführen. Das Angreifen der Steuereinrichtung an dem Sperrelement ist sowohl mechanisch als direkter Angriff als auch elektrisch oder elektronisch drahtlos oder drahtgebunden als indirekter Angriff zu verstehen.

In weiterer Ausgestaltung der Erfindung weist die Steuereinrichtung eine Sensoreinheit auf, die eine Position oder einen Weg des Auszugprofils kurz vor Erreichen der Schutzposition erfasst, und die über Fernübertragungsmittel mit dem Sperrelement in Verbindung steht, um einen Stellvorgang des Sperrelements in Richtung der Sperrstellung in Abhängigkeit von der erfassten Position oder dem erfassten Weg des Auszugprofils zu bewirken. Die Steuereinrichtung und die Sensoreinheit wie auch die Fernübertragungsmittel können vorzugsweise mechanisch, elektrisch oder elektronisch ausgeführt sein.

In weiterer Ausgestaltung der Erfindung weist die Sensoreinheit einen mechanischen Mitnehmer auf, der in einen Bewegungsweg des Auszugprofils hineinragt, und als Fernübertragungsmittel ist ein mechanischer Zugstrang vorgesehen, der sich zwischen dem Mitnehmer und dem Sperrelement erstreckt. Die mechanische Ausführung der Sensoreinheit und der Fernübertragungsmittel und damit auch der Steuereinrichtung ist kostengünstig und robust.

In weiterer Ausgestaltung der Erfindung ist in dem mechanischen Zugstrang ein Zugfedermittel integriert, das zur Zugkraftbegrenzung des Zugstrangs vorgesehen ist. Vorzugsweise ist das Zugfedermittel eine Schraubenzugfeder.

In weiterer Ausgestaltung der Erfindung ist das Sperrelement als schwenkbewegliche Sperrklinke gestaltet, die mit einer komplementären Stützaufnahme an der Wickelwelle zusammenwirkt. Die Stützaufnahme ist vorzugsweise an einem Stützelement vorgesehen, das drehfest mit der Wickelwelle verbunden ist. Die Sperrklinke wird vorzugsweise durch eine Schenkelfeder in der außer Eingriff befindlichen Ruhestellung gehalten.

In weiterer Ausgestaltung der Erfindung ist das Auszugprofil in seitlichen Führungsschienenanordnungen geführt, und der Mitnehmer ist in einer der Führungsschienenanordnungen parallel zu dem Bewegungsweg des Auszugprofils verschiebbar gelagert. Die seitlichen Führungsschienenanordnungen sind in betriebsfertig montiertem Zustand der Schutzvorrichtung fahrzeugfest angeordnet. Falls die Schutzvorrichtung zur Beschattung eines Glasflächenbereichs des Fahrzeuginnenraums, insbesondere zur Beschattung einer Heckscheibe, vorgesehen ist, sind die Führungsschienenanordnungen an entsprechenden Karosseriesäulenabschnitten des Fahrzeuginnenraums vorgesehen, die den entsprechenden Glasflächenbereich begrenzen.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt schematisch in teilweiser Explosionsdarstellung eine erste Ausführungsform einer erfindungsgemäßen Schutzvorrichtung,
- Fig. 2: ebenfalls in schematischer Darstellung eine weitere Ausführungsform einer erfindungsgemäßen Schutzvorrichtung ähnlich Fig. 1,
- Fig. 3: eine weitere Ausführungsform einer erfindungsgemäßen Schutzvorrichtung ähnlich den Fig. 1 und 2,
- Fig. 4: schematisch in einer Seitenansicht die Schutzvorrichtung nach Fig. 1 in einer ersten Betriebsstellung,
- Fig. 5: die Schutzvorrichtung nach Fig. 4 in einer weiteren Betriebsstellung und
- Fig. 6: die Schutzvorrichtung nach den Fig. 4 und 5 in einer dritten Betriebsstellung.

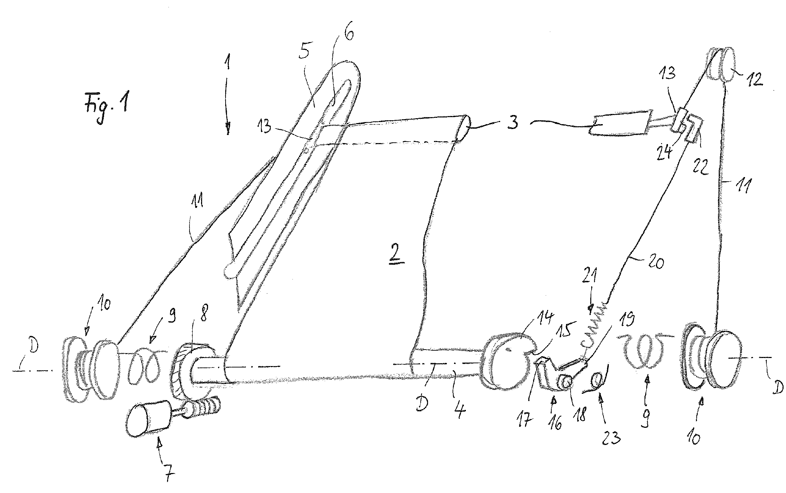

Eine Schutzvorrichtung 1 nach den Fig. 1 und 4 bis 6 ist zur Beschattung einer Heckscheibe eines Personenkraftwagens vorgesehen. Die Schutzvorrichtung 1 weist ein flexibles Flächengebilde 2 auf, das auf einer Wickelwelle 4 auf- und abwickelbar gelagert ist. Die Wickelwelle 4 ist im betriebsfertig montierten Zustand der Schutzvorrichtung 1 innerhalb des Fahrzeuginnenraums in einer Tragstruktur (nicht dargestellt) um eine Drehachse D drehbar gelagert, wobei die Tragstruktur fahrzeugfest positioniert ist. Die Tragstruktur kann insbesondere als Kassettengehäuse oder als Rahmenstruktur ausgebildet sein. Das flexible Flächengebilde 2 ist mit einem in Aufwickelrichtung vorderen Stirnendbereich auf der Wickelwelle 4 befestigt. Ein gegenüberliegender, in Abwickelrichtung und demzufolge in Auszugrichtung des Flächengebildes 2 vorderer Stirnendbereich ist mit einem formstabilen Auszugprofil 3 versehen, das sich quer zur Auszugrichtung über die gesamte Breite des flexiblen Flächengebildes 2 erstreckt. Das Auszugprofil 3 weist an seinen gegenüberliegenden Stirnseiten jeweils ein Führungselement 13 auf, das in jeweils einer Führungsspur 6 jeweils einer seitlichen Führungsschienenanordnung 5 längsverschiebbar gelagert ist. Die gegenüberliegenden Führungsschienenanordnungen 5, von denen in Fig. 1 lediglich die in der Zeichnung linke Führungsschienenanordnung 5 dargestellt ist, sind in betriebsfertig montiertem Zustand der Schutzvorrichtung 1 fahrzeugfest an gegenüberliegenden Karosseriesäulenabschnitten befestigt.

Die Wickelwelle 4 ist in beiden Drehrichtungen relativ zur Drehachse D angetrieben durch einen elektrischen Antriebsmotor 7, der mechanisch mit der Wickelwelle 4 in Wirkverbindung steht. Bei dem Ausführungsbeispiel gemäß Fig. 1 ist auf der Antriebswelle des Antriebsmotors 7 eine Antriebsschnecke gehalten, die mit einem Schneckenrad 8 kämmt, das drehfest und koaxial zur Wickelwelle 4 mit der Wickelwelle 4 verbunden ist.

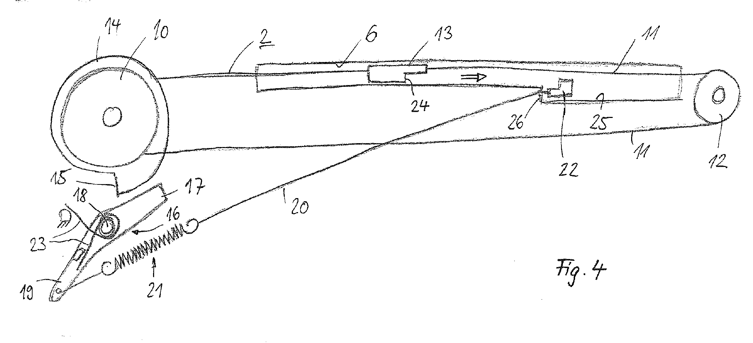

Ebenfalls drehfest mit der Wickelwelle 4 verbunden ist an einem zu dem Schneckenrad 8 gegenüberliegenden Stirnendbereich der Wickelwelle 4 ein Stützelement 14 befestigt, das mit einer in Form einer Radialstufe gestalteten Stützaufnahme 15 versehen ist. Das Stützelement 14 dreht sich aufgrund der koaxialen und drehfesten Verbindung mit der Wickelwelle 4 zwangsläufig in beiden Drehrichtungen mit. Dem Stützelement 14, das als Stützscheibe ausgebildet ist, ist ein mechanisches Sperrelement 16 zugeordnet, das als Sperrklinke ausgeführt ist und mittels eines Lagerzapfens 18 um eine zu der Drehachse D parallele Schwenkachse fahrzeugfest gelagert ist. Die Sperrklinke 16 wird durch eine Federeinheit, vorliegend in Form einer Schenkelfeder 23, in unbelasteter Ruhestellung außer Eingriff zu der Stützscheibe 14 und der Stützaufnahme 15 positioniert, wie anhand der Fig. 4 erkennbar ist. Die Schenkelfeder 23 ist derart gestaltet, dass sie gemäß der Darstellung nach den Fig. 4 bis 6 auf die Sperrklinke 16 ein Drehmoment im Uhrzeigersinn ausübt, wodurch ein Sperrschenkel 17 der Sperrklinke 16 in radialem Abstand zu der Stützscheibe 14 und der Stützaufnahme 15 gehalten ist.

Die Sperrklinke 16 weist gegenüberliegend zu dem Sperrschenkel 17 einen Betätigungsschenkel 19 auf, der relativ zu dem Lagerzapfen 18 im Wesentlichen entgegengerichtet zu dem Sperrschenkel 17 radial zur Schwenkachse der Sperrklinke 16 abragt. An dem Betätigungsschenkel 19 greift ein mechanischer Zugstrang 20 in Form eines Betätigungsseils an. In den mechanischen Zugstrang 20 ist ein Zugfedermittel 21 in Form einer Schraubenzugfeder integriert, um einen federbelasteten Wegausgleich und eine Zugkraftbegrenzung des Zugstrangs 20 zu erzielen.

Der Zugstrang 20 ist an seinem zu dem Betätigungsschenkel 19 gegenüberliegenden Stirnende mit einem Mitnehmer 22 fest verbunden, der in einem Gleitführungsabschnitt 25 der Führungsschienenanordnung parallel zu dem Führungsglied 13 des Auszugprofils 3 verschiebbar gelagert ist. Der Gleitführungsabschnitt 25 ist in Richtung zur Wickelwelle 4 hin durch einen stufenförmig gestalteten Anschlag 26 begrenzt, um eine Längsbeweglichkeit des Mitnehmers 22 zu begrenzen. Der Mitnehmer 22 ist in einem Endbereich der Führungsspur 6 für das Führungsglied 13 des Auszugprofils positioniert, in dem das Auszugprofil 3 sich kurz vor Erreichen der ausgezogenen Schutzposition für das Flächengebilde 2 befindet. Das Führungsglied 13 ist mit einem Mitnahmesteg 24 versehen, der in die Bewegungsbahn des Mitnehmers 22 hineinragt und demzufolge bei einer Überführung des Auszugprofils 3 und des seitlichen Führungsglieds 13 in Richtung der ausgezogenen Schutzposition des Flächengebildes 2 den Mitnehmer 22 mitnimmt, sobald das Führungsglied 13 einen Endbereich seines Verfahrwegs in Richtung der ausgezogenen Schutzposition erreicht hat.

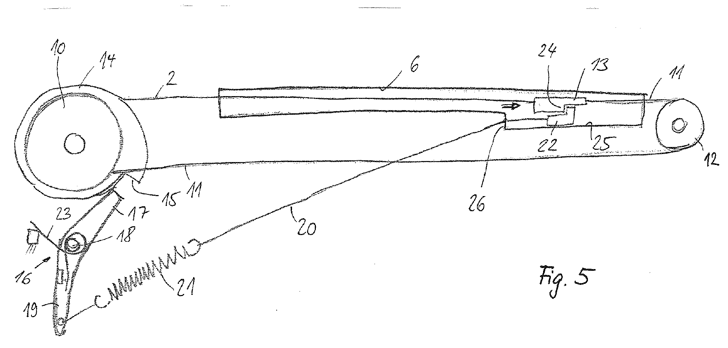

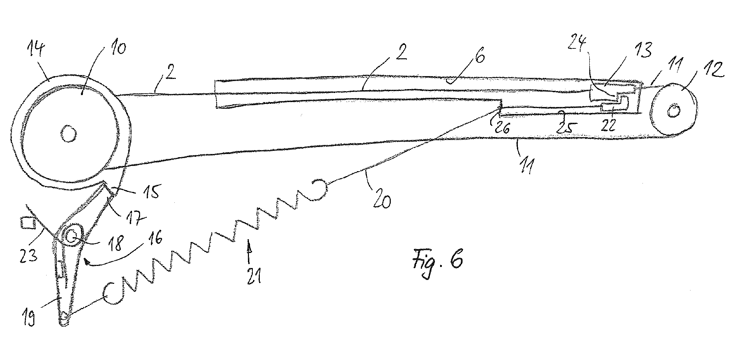

Anhand der Fig. 4 bis 6 ist gut erkennbar, welche Bewegungsvorgänge bei einer Überführung des Auszugprofils 3 und damit des Führungsglieds 13 in die ausgezogene Schutzposition im Endbereich des Verfahrwegs auftreten. Sobald sich ausgehend von Fig. 4 das Führungsglied 13 weiter in Pfeilrichtung bewegt, kommt der Mitnahmesteg 24 an dem Mitnehmer 22 zur Anlage und nimmt den Mitnehmer 22 in Bewegungsrichtung des Führungsglieds 13 und damit des Auszugprofils 3 mit. Dadurch wird auf den Zugstrang 20 eine Zugkraft ausgeübt, die auf den Betätigungsschenkel 19 der Sperrklinke 16 übertragen wird. Hierdurch wird entgegen der Federkraft der Schenkelfeder 23 ein Drehmoment um den Lagerzapfen 18 entgegen dem Uhrzeigersinn in Fig. 5 ausgeübt, wodurch der Sperrschenkel 17 gegen einen Umfang der Stützscheibe 14 tangential gedrückt wird und dort zur Anlage kommt. Bei einem weiteren Ausziehvorgang des Flächengebildes 2 wird die Wickelwelle und damit auch die Stützscheibe 14 weiterhin im Uhrzeigersinn gemäß den Fig. 4 bis 6 verdreht, wodurch die Stützaufnahme 15 in Umfangsrichtung an einer Stirnfläche des Sperrschenkels 17 zur Anlage kommt (Fig. 6). Dadurch ist eine weitere Drehbewegung der Wickelwelle und der Stützscheibe 14 blockiert. Das Auszugprofil 3 mit seinem Führungsglied 13 selbst hingegen kann - wie nachfolgend ausgeführt werden wird - noch weiter bis in seine Endstellung in der Führungsspur 6, d.h. bis in die ausgezogene Schutzposition, weiterbewegt werden, wodurch zwangsläufig das Flächengebilde 2 in Auszugrichtung gestrafft wird. Auch der Zugstrang 20 wird gestrafft, wobei ein entsprechender Längenausgleich und eine Begrenzung der Zugkraft durch ein entsprechendes Wirksamwerden des Zugfedermittels 21 in Form der Schraubendruckfeder ausgeglichen werden.

Sobald in umgekehrter Richtung das Auszugprofil wieder zurückbewegt wird, wird die auf den Betätigungsschenkel 19 wirkende Zugkraft aufgehoben und die Schenkelfeder 23 lenkt die Sperrklinke 16 wieder aus der Stützaufnahme 15 aus, wodurch eine Drehbewegung der Wickelwelle 4 in Aufwickelrichtung des Flächengebildes 2 freigegeben wird.

Wie anhand der Fig. 1 erkennbar ist, wird auch das Auszugprofil 3 durch Antriebsübertragungsmittel 11 angetrieben, deren Antriebskraft von dem Antriebsmotor 7 abgeleitet ist. Bei der Ausführungsform gemäß den Fig. 1 und 4 bis 6 greift an jedem Führungsglied 13 des Auszugprofils 3 innerhalb jeder Führungsschienenanordnung 5 jeweils ein Seilzug 11 an, der auf das jeweilige Führungsglied 13 in Auszugrichtung eine Zugkraft ausübt. Hierzu ist der jeweilige Seilzug 11 über jeweils eine Umlenkrolle 12 an einem in Auszugrichtung vorderen Stirnendbereich der jeweiligen Führungsschienenanordnung 5 umgelenkt. Jeder Seilzug 11 ist auf einer Seiltrommel 10 auf- und abwickelbar gehalten, wobei die beiden Seiltrommeln 10 koaxial zur Drehachse D der Wickelwelle 4 angeordnet sind und über jeweils eine Ausgleichsfeder 9 mit der Wickelwelle 4 in Drehverbindung stehen. Die jeweilige Ausgleichsfeder 9 ist als Torsionsfeder gestaltet und bewirkt eine Drehmomentübertragung des Drehmoments der Wickelwelle 4 und damit des Drehmoments des Antriebsmotors 7 auf die jeweilige Seiltrommel 10. Gleichzeitig ermöglicht die jeweilige Ausgleichsfeder 9 aber eine zur Wickelwelle 4 unabhängige Drehbarkeit der jeweiligen Seiltrommel 10 unter gleichzeitiger Spannung der jeweiligen Ausgleichsfeder 9. Hierdurch werden die Seilzüge 11 permanent unter Spannung gehalten und üben eine permanente Zugbelastung auf die Führungsglieder 13 des Auszugprofils 3 aus. Die Ausgleichsfedern 9 gewährleisten demzufolge auch, dass die Seiltrommeln 10 und damit die Seilzüge 11 auch nach Blockieren der Wickelwelle 4 durch Eingriff der Sperrklinke 16 in die Stützscheibe 14 das Auszugprofil 3 und die Führungsglieder 13 noch bis in die ausgezogene Endstellung, d.h. die ausgezogene Schutzposition, überführen können.

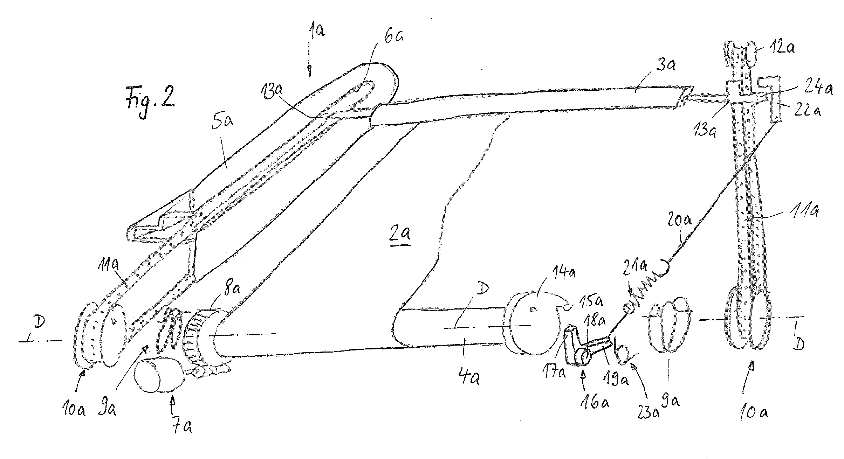

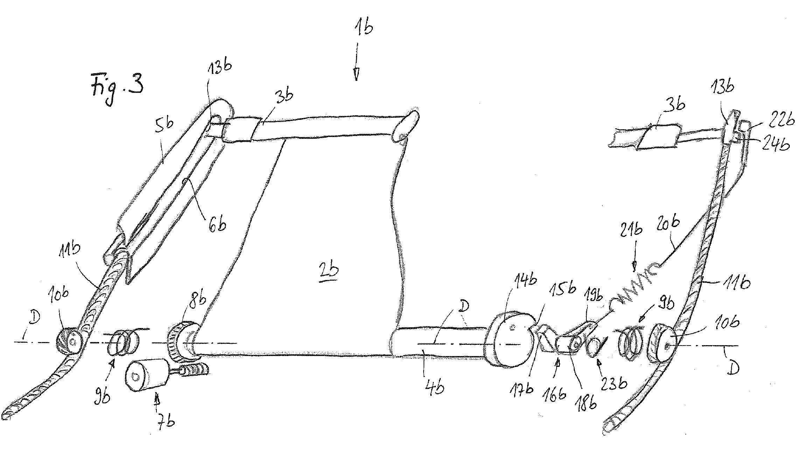

Die Schutzvorrichtungen 1a und 1b nach den Fig. 2 und 3 sind bis auf die Antriebsübertragungsmittel, die auf das jeweilige Auszugprofil 3a, 3b wirken, identisch gestaltet zu der Schutzvorrichtung 1 nach den Fig. 1 und 4 bis 6. Identische oder funktionsgleiche Teile und Abschnitte der Schutzvorrichtung 1a oder 1b sind mit gleichen Bezugszeichen unter Hinzufügung des Buchstabens a oder b versehen. Zur Vermeidung von Wiederholungen wird auf die ausführliche Beschreibung zu der Schutzvorrichtung 1 nach den Fig. 1 und 4 bis 6 verwiesen. Die Schutzvorrichtung 1a nach Fig. 2 weist statt eines offenen Seilzugs als Antriebsübertragungsmittel einen geschlossen umlaufenden Riemenzug 11a auf. Die lediglich schematische Darstellung gemäß Fig. 2 vermittelt den Eindruck, dass der rechte Riemenzug 11a anders ausgerichtet ist als der linke Riemenzug 11a. Dies ist lediglich aus zeichnerischen Darstellungsgründen erfolgt. Der rechte Riemenzug 11a verläuft selbstverständlich parallel zu dem gegenüberliegenden Riemenzug 11a. Die Funktionsweise der Steuereinrichtung und der Blockiereinrichtung zur Blockierung der Wickelwelle 4a ist identisch gestaltet wie die Blockiereinrichtung und die Steuereinrichtung gemäß den Fig. 1 und 4 bis 6.

Bei der Schutzvorrichtung 1b nach Fig. 3 wird als Antriebsübertragungsmittel auf jeder Seite eine flexible Gewindewelle 11 b vorgesehen, die Zug- und Druckbelastungen übertragen kann. Die Gewindewellen 11 b werden auch als Flexwellen bezeichnet. Die Gewindewellen 11 b sind durch jeweils ein Schneckenrad 10b angetrieben, das über die jeweilige Ausgleichsfeder 9b mit der Wickelwelle 4b drehfest in Wirkverbindung steht. Das jeweilige Schneckenrad 10b ist koaxial zur Drehachse D mit der Wickelwelle 4b in Wirkverbindung. Die Gewindewellen 11 b schieben aufgrund der Kraftübertragung über die Schneckenräder 10b die Führungsglieder 13b in den Führungsspuren der Führungsschienenanordnungen 5b in Auszugrichtung entlang. Die Funktion von Steuereinrichtung und Blockiereinrichtung zur Blockierung und Freigabe der Wickelwelle 4b sind identisch zu der Ausführungsform nach den Fig. 1 und 4 bis 6.

## Patentansprüche

1. Schutzvorrichtung (1, 1a, 1b) für ein Kraftfahrzeug, insbesondere für einen Fahrzeuginnenraum, mit einem flexiblen Flächengebilde (2, 2a, 2b), das auf einer Wickelwelle (4, 4a, 4b) gehalten und zwischen einer ausgezogenen Schutzposition und einer auf die Wickelwelle (4, 4a, 4b) aufgewickelten Ruheposition verlagerbar ist, wobei die Wickelwelle (4, 4a, 4b) mittels eines Antriebsmotors (7, 7a, 7b) in beiden Drehrichtungen angetrieben ist, wobei das Flächengebilde (2, 2a, 2b) an seinem in Auszugrichtung vorderen Stirnendbereich mit einem formstabilen Auszugprofil (3, 3a, 3b) versehen ist, und wobei Antriebsübertragungsmittel (11, 11a, 11 b) vorgesehen sind, die am Auszugprofil (3, 3a, 3b) angreifen und mit der Wickelwelle (4, 4a, 4b) in Wirkverbindung sind, **dadurch gekennzeichnet, dass** der Wickelwelle (4, 4a, 4b) eine Blockiereinrichtung zugeordnet ist, die mittels einer Steuereinrichtung zwischen einer die Wickelwelle (4, 4a, 4b) für eine Drehbewegung freigebenden Freigabestellung und einer die Wickelwelle (4, 4a, 4b) gegen eine Drehbewegung blockierenden Sicherungsstellung verlagerbar ist abhängig von einer Verlagerungsstellung des Auszugprofils (3, 3a, 3b).

2. Schutzvorrichtung nach Anspruch 1, **dadurch gekennzeichnet, dass** die Blockiereinrichtung ein mit der Wickelwelle (4, 4a, 4b) in Wirkverbindung bringbares mechanisches Sperrelement (16, 16a, 16b) umfasst.

3. Schutzvorrichtung nach Anspruch 2, **dadurch gekennzeichnet, dass** das Sperrelement (16, 16a, 16b) mittels einer Federeinheit (23, 23a, 23b) derart federkraftbeaufschlagt ist, dass das Sperrelement (16, 16a, 16b) in einer Ruhestellung außer Eingriff mit der Wickelwelle (4, 4a, 4b) ist.

4. Schutzvorrichtung nach Anspruch 3, **dadurch gekennzeichnet, dass** die Steuereinrichtung an dem Sperrelement (16, 16a, 16b) angreift, um das Sperrelement (16, 16a, 16b) aus der Ruhestellung gegen die Federkraft der Federeinheit (23, 23a, 23b) in eine Sperrstellung relativ zur Wickelwelle (4, 4a, 4b) zu überführen.

5. Schutzvorrichtung nach einem der vorhergehenden Ansprüche, **dadurch gekennzeichnet, dass** die Steuereinrichtung eine Sensoreinheit aufweist, die eine Position oder einen Weg des Auszugprofils (3, 3a, 3b) kurz vor Erreichen der Schutzposition erfasst, und die über Fernübertragungsmittel mit dem Sperrelement (16, 16a, 16b) in Verbindung steht, um einen Stellvorgang des Sperrelements (16, 16a, 16b) in Richtung der Sperrstellung in Abhängigkeit von der erfassten Position oder dem erfassten Weg des Auszugprofils (3, 3a, 3b) zu bewirken.

6. Schutzvorrichtung nach Anspruch 5, **dadurch gekennzeichnet, dass** die Sensoreinheit einen mechanischen Mitnehmer (22, 22a, 22b) aufweist, der in einen Bewegungsweg des Auszugprofils (3, 3a, 3b) hineinragt, und dass als Fernübertragungsmittel ein mechanischer Zugstrang (20, 20a, 20b) vorgesehen ist, der sich zwischen dem Mitnehmer (22, 22a, 22b) und dem Sperrelement (16, 16a, 16b) erstreckt.

7. Schutzvorrichtung nach Anspruch 6, **dadurch gekennzeichnet, dass** in den mechanischen Zugstrang (20, 20a, 20b) ein Zugfedermittel (21, 21 a, 21 b) integriert ist, das als Zugkraftausgleich des Zugstrangs (20, 20a, 20b) vorgesehen ist.

8. Schutzvorrichtung nach einem der vorhergehenden Ansprüche, **dadurch gekennzeichnet, dass** das Sperrelement als schwenkbewegliche Sperrklinke (16, 16a, 16b) gestaltet ist, die mit einer komplementären Stützaufnahme (15, 15a, 15b) an der Wickelwelle (4, 4a, 4b) zusammenwirkt.

9. Schutzvorrichtung nach einem der vorhergehenden Ansprüche, **dadurch gekennzeichnet, dass** das Auszugprofil (3, 3a, 3b) in seitlichen Führungsschienenanordnungen (5, 5a, 5b) geführt ist, und dass der Mitnehmer (22, 22a, 22b) in einer der Führungsschienenanordnungen (5, 5a, 5b) parallel zu dem Bewegungsweg des Auszugprofils (3, 3a, 3b) verschiebbar gelagert ist.
